(19)

Europäisches Patentamt

European Patent Office

Office européen des brevets

(11) **EP 4 738 607 A1**

(12) **EUROPEAN PATENT APPLICATION**

published in accordance with Art. 153(4) EPC

(43) Date of publication:
06.05.2026 Bulletin 2026/19

(21) Application number: 24849162.3

(22) Date of filing: 30.07.2024

(51) International Patent Classification (IPC):
*H01Q 3/36* (2006.01)   *H01Q 21/06* (2006.01)
*H01Q 21/30* (2006.01)   *H04B 1/38* (2015.01)

(52) Cooperative Patent Classification (CPC):
**H01Q 3/36; H01Q 21/06; H01Q 21/30; H04B 1/38**

(86) International application number:
**PCT/JP2024/027119**

(87) International publication number:
**WO 2025/028517 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 02.08.2023 JP 2023125993

(71) Applicant: Hiroshima University
**Higashihiroshima-shi
Hiroshima 739-8511 (JP)**

(72) Inventor: FUJISHIMA Minoru
**Higashihiroshima-shi, Hiroshima 739-8511 (JP)**

(74) Representative: Caspary, Karsten et al
**Kroher-Strobel
Rechts- und Patentanwälte PartmbB
Bavariaring 20
80336 München (DE)**

(54) **ARRAY ANTENNA DEVICE**

(57)   An array antenna device (100) is provided with: a first layer (10) in which a plurality of antenna elements (11) are arranged in a grid shape; and a second layer (20) that overlaps the first layer (10). The second layer (20) has: an IF signal main line (21) and an LO signal main line (22) that extend in the orthogonal direction to each other; an IF signal branch line (23) and an LO signal branch line (24) that extend in the orthogonal direction of the IF signal main line (21) and the LO signal main line (22); and a plurality of mixers (29) that are arranged in the same grid shape as the plurality of antenna elements (11) at the intersections of the branch lines (23, 24), and electrically connected to the branch lines (23, 24) and the antenna elements (11). Phase shifters (25, 26, 27, 28) are provided between the connection points of the branch lines (23, 24) in the main lines (21, 22) and/or between the connection points of the mixers (29) in the branch lines (23, 24). The first layer (10) and the second layer (20) vertically overlap such that the arrangement region (110) of the plurality of antenna elements (11) in the first layer (10) and the arrangement region (290) of the plurality of mixers (29) in the second layer (20) overlap in a plan view.

FIG.1

EP 4 738 607 A1

## Description

### TECHNICAL FIELD

The present invention relates to a wireless device equipped with an array antenna, and more particularly, to an array antenna device suitable for use in a transceiver operating in the 300 GHz band.

### BACKGROUND ART

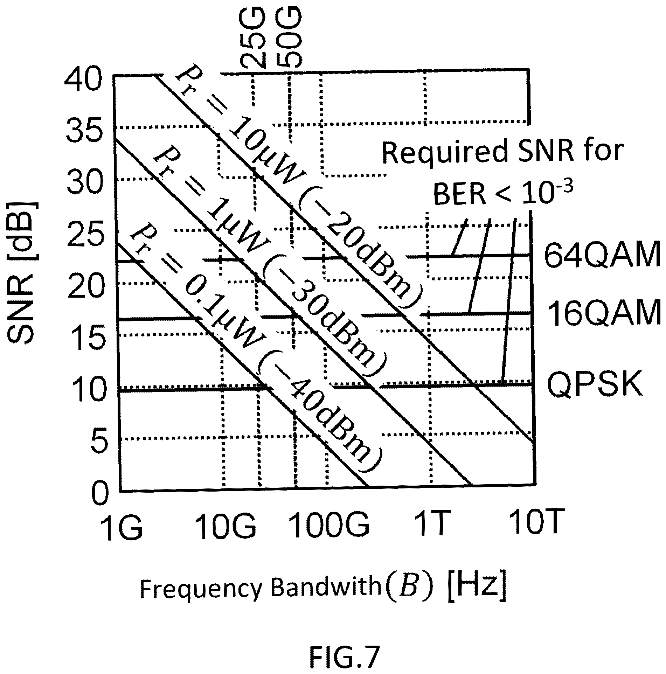

FIG. 7 is a graph illustrating the relationship between frequency bandwidth and S/N ratio for each received power level of radio waves. The horizontal axis of the graph represents the frequency bandwidth, and the vertical axis represents the S/N ratio. The graph plots the relationship between frequency bandwidth and S/N ratio when the received power Pr is 0.1 $\mu$W (equivalent to -40 dBm), 1 $\mu$W (equivalent to -30 dBm), and 10 $\mu$W (equivalent to -20 dBm). As shown in the graph, the S/N ratio decreases as the frequency bandwidth increases, regardless of the magnitude of Pr.

The graph includes auxiliary lines indicating the required S/N ratios for each modulation scheme-QPSK (Quadrature Phase Shift Keying), 16QAM (16 Quadrature Amplitude Modulation), and 64QAM (64 Quadrature Amplitude Modulation)-to achieve a BER (Bit Error Rate) of less than $10^{-3}$. According to this, at a frequency bandwidth of 25 GHz, communication is possible with any of the modulation schemes (QPSK, 16QAM, or 64QAM) if Pr is 0.1 $\mu$W or higher. However, at a frequency bandwidth of 50 GHz, the S/N ratio becomes too low for Pr of 0.1 $\mu$W, making communication with QPSK difficult. Furthermore, to achieve stable QPSK communication at even higher frequency bandwidths of around 100 GHz, a received power of 1 $\mu$W or higher is required.

The sixth-generation mobile communication system (6G) aims to achieve data rates of 100 Gbps or higher using even higher frequency bands of 300 GHz compared to the fifth-generation mobile communication system (5G). Therefore, in next-generation mobile communication systems, which will increasingly utilize higher frequencies and higher data rates, it will be necessary to increase the output power of transmitters to maintain large received power. Up until now, approaches to increase the output power of transceivers operating in the 300 GHz band have included using lenses or horns to enhance antenna gain, or employing rat-race power couplers to power-couple a plurality of RF signals and thereby increase the output power of a single transceiver (see, for example, Patent Literature 1).

CITATION LIST

PATENT LITERATURE

Patent Literature 1: WO 2020/110814 A1

### SUMMARY OF THE INVENTION

TECHNICAL PROBLEM

From the perspective of Equivalent Isotropic Radiation Power (EIRP), the received power can be evaluated as follows: given the distance d between the transmitter and the receiver, and the antenna area Ar of the receiver, the received power Pr can be expressed as $Pr = EIPR \cdot Ar/4\pi d^2$. In other words, the received power is determined by the antenna area Ar of the receiver, irrespective of the frequency bandwidth. The larger the antenna area, the greater the antenna gain, and thus, the greater the received power.

To increase antenna gain, it is effective to adopt an array antenna in which a plurality of antenna elements is arranged. Furthermore, by adopting a phased array antenna, beamforming technology and beam sweeping become available. Beamforming allows for transmitting radio waves in a specific direction or receiving radio waves from a specific direction by adjusting the signal phase of each antenna element, while beam sweeping enables freely changing the beam direction. This approach not only broadens the beam control angle compared to using lenses or horns but also makes beamforming itself easier.

In an array antenna, the antenna elements are arranged at a pitch of half the wavelength of the radio waves. When it comes to the 300 GHz band, it is necessary to arrange the antenna elements at a pitch of approximately 500 $\mu$m. Therefore, if one attempts to adopt an array antenna with antenna elements arranged in a two-dimensional grid for a transceiver using the 300 GHz band, the transceiver circuit must be placed in an area of about 500 $\mu$m square. Although the miniaturization of semiconductor processes can reduce the size of transistors, passive elements such as inductance elements and capacitance elements are difficult to miniaturize. Consequently, it is challenging to place circuits disclosed in Patent Literature 1 in such a narrow area. Thus, adopting an array antenna for a transceiver using the 300 GHz band is difficult due to the constraints of circuit placement area.

In view of the above problem, it is an object of the present invention to provide an array antenna device capable of utilizing the 300 GHz band.

SOLUTION TO THE PROBLEM

An array antenna device according to one aspect of the present invention includes a first layer in which a plurality of antenna elements is arranged in a grid pattern and a second layer stacked on the first layer. The second layer includes an IF signal main line and an LO signal main line extending in mutually orthogonal directions, a plurality of IF signal branch lines and a plurality of LO signal branch lines extending in directions orthogonal to the IF signal main line and the LO signal main line, respectively, a plurality of mixers arranged in a same grid pattern as the plurality of antenna elements at each intersection of the plurality of IF signal branch lines and the plurality of LO signal branch lines, and electrically connected to the plurality of IF signal branch lines, the plurality of LO signal branch lines, and the plurality of antenna elements, respectively, a plurality of first phase shifters in at least one of between each connection point of the plurality of IF signal branch lines in the IF signal main line and between each connection point of the plurality of mixers in the plurality of LO signal branch lines, and a plurality of second phase shifters in at least one of between each connection point of the plurality of LO signal branch lines in the LO signal main line and between each connection point of the plurality of mixers in the plurality of IF signal branch lines. The first layer and the second layer are stacked vertically such that an arrangement region of the plurality of antenna elements in the first layer and an arrangement region of the plurality of mixers in the second layer overlap in plan view.

ADVANTAGEOUS EFFECTS OF THE INVENTION

According to the present invention, it is possible to transmit and receive 300 GHz band radio waves with an array antenna. This enables the antenna gain to be easily increased in the 300 GHz band.

**BRIEF DESCRIPTION OF DRAWINGS**

[FIG. 1] is a schematic plan view of an array antenna device according to an embodiment of the present invention.
[FIG. 2] is a diagram illustrating a circuit example of a 300 GHz silicon CMOS transmitter implemented on the semiconductor substrate of the array antenna device of FIG. 1.
[FIG. 3] is a diagram illustrating an example in which the transmitter circuit of FIG. 2 is configured as a chiplet configuration.
[FIG. 4] is a diagram illustrating a circuit example of a 300 GHz silicon CMOS receiver implemented on the semiconductor substrate of the array antenna device of FIG. 1.
[FIG. 5] is a diagram illustrating an example in which the receiver circuit of FIG. 4 is configured as a chiplet configuration.
[FIG. 6] is a diagram illustrating a circuit example of a transceiver implemented on the semiconductor substrate of the array antenna device of FIG. 1.
[FIG. 7] is a graph illustrating the relationship between frequency bandwidth and S/N ratio for each received power level of radio waves.

**DETAILED DESCRIPTION OF INVENTION**

Hereinafter, the embodiments will be described in detail with reference to the drawings as appropriate. However, overly detailed explanations may be omitted. For example, detailed descriptions of well-known matters and redundant explanations of substantially identical configurations may be omitted. This is to avoid unnecessary redundancy in the following description and to facilitate understanding by those skilled in the art. The inventors provide the accompanying drawings and the following description for the purpose of enabling those skilled in the art to fully understand the present invention, and do not intend to limit the subject matter described in the claims. Additionally, the dimensions and detailed shapes of the parts depicted in the drawings may differ from the actual ones.

[Embodiment]

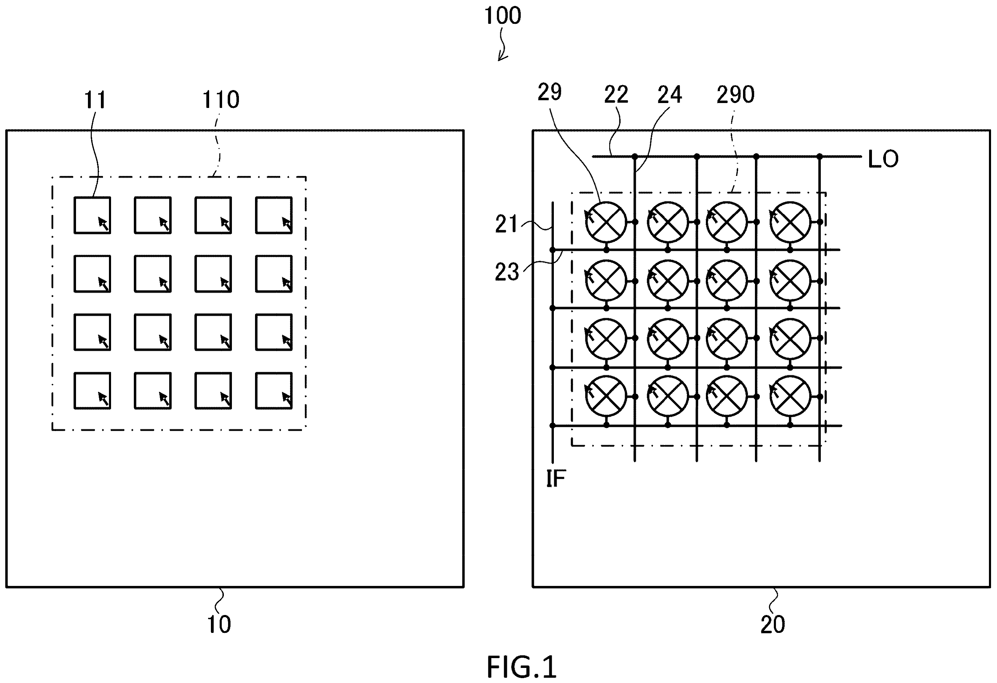

FIG. 1 is a schematic plan view of an array antenna device according to an embodiment of the present invention. The array antenna device 100 according to the present embodiment is a 300 GHz band silicon CMOS transceiver configured with a printed circuit board 10 and a semiconductor substrate 20 stacked one above the other. In FIG. 1, for convenience, the plan views of the printed circuit board 10 and the semiconductor substrate 20 are illustrated side by side; however, in practice, these are stacked one above the other and are electrically connected by flip-chip bonding.

In the printed circuit board 10, antenna elements 11 such as rectangular microstrip patch antennas are arranged in a 4×4 grid pattern in an antenna element arrangement region 110. Considering that the desired RF frequency of the array antenna device 100 is 252 to 296 GHz (wavelength of approximately 1000 to 1200 μm), as an example, the sum of the lengths of the two sides of the antenna element 11 is 300 to 350 μm, which is a quarter wavelength of the RF signal with some margin, and the arrangement pitch of the antenna elements 11 in the row direction and the column direction (corresponding to the horizontal direction and the vertical direction in FIG. 1) is 600 to 700 μm, which is a half wavelength of the RF signal with some margin.

Although not illustrated in FIG. 1, power supply lines and ground lines are routed in a grid pattern between the antenna elements 11 on the printed circuit board 10. These power supply lines and ground lines provide operating power to circuit elements on the semiconductor substrate 20 through flip-chip bonding.

The semiconductor substrate 20 has circuits of a 300 GHz band transmitter and/or receiver, which will be described later, implemented thereon. In general, a transmitter inputs an IF signal and an LO signal to a mixer, upconverts the IF signal with the LO signal to generate an RF signal, amplifies the RF signal with a power amplifier, and transmits it from an antenna. On the other hand, a receiver amplifies an RF signal received by an antenna with a low-noise amplifier, inputs the amplified RF signal together with an LO signal to a mixer, and downconverts the RF signal with the LO signal to generate an IF signal. Here, when the RF signal reaches the 300 GHz band, due to the operational limits of CMOS transistors, it becomes difficult to place a power amplifier at the final stage in a transmitter and to place a low-noise amplifier at the first stage in a receiver. Therefore, in high-frequency bands such as the 300 GHz band, a transmitter with a mixer-last configuration in which a mixer is placed at the final stage, or a receiver with a mixer-first configuration in which a mixer is placed at the first stage, is used.

In the semiconductor substrate 20, mixers 29 are arranged in a 4×4 grid pattern in a mixer arrangement region 290 at the same arrangement pitch as the antenna elements 11. The mixers 29 and the antenna elements 11 have a one-to-one correspondence, and each mixer 29 is electrically connected to a corresponding antenna element 11 on the printed circuit board 10 via bumps (not illustrated). That is, if the printed circuit board 10 is regarded as an upper layer and the semiconductor substrate 20 is regarded as a lower layer, all or at least a part of the antenna element arrangement region 110 and the mixer arrangement region 290 overlap in plan view. Each of these mixers 29 is a mixer of the above-described transmitter with a mixer-last configuration or receiver with a mixer-first configuration, and the array antenna device 100 is configured as an assembly of a plurality of transmitters with a mixer-last configuration, an assembly of a plurality of receivers with a mixer-first configuration, or a mixed assembly thereof.

In the semiconductor substrate 20, an IF signal main line 21 and an LO signal main line 22 extend in mutually orthogonal directions outside the mixer arrangement region 290. Furthermore, a plurality of IF signal branch lines 23 extend from the IF signal main line 21 at the same arrangement pitch as the mixers 29, that is, at an interval of 600 to 700 μm, which is the same as the arrangement pitch of the antenna elements 11, in a direction orthogonal to the IF signal main line 21, that is, parallel to the LO signal main line 22. In the present embodiment, there are four IF signal branch lines 23. Similarly, a plurality of LO signal branch lines 24 extend from the LO signal main line 22 at the same arrangement pitch as the mixers 29, that is, at an interval of 600 to 700 μm, which is the same as the arrangement pitch of the antenna elements 11, in a direction orthogonal to the LO signal main line 22, that is, parallel to the IF signal main line 21. In the present embodiment, there are four LO signal branch lines 24. The IF signal main line 21 and the IF signal branch lines 23 are lines that supply IF signals to the mixers 29 in a transmitter, and lines that obtain IF signals from the mixers 29 and power-couple them in a receiver. The LO signal main line 22 and the LO signal branch lines 24 are lines that supply LO signals to the mixers 29. Each mixer 29 is arranged at each intersection of the plurality of IF signal branch lines 23 and the plurality of LO signal branch lines 24, and is connected to the nearest IF signal branch line 23 and LO signal branch line 24.

Phase shifters (not illustrated) are inserted in the IF signal main line 21, the LO signal main line 22, the IF signal branch lines 23, and the LO signal branch lines 24, respectively, so that the phases of the IF signals and LO signals input to and output from each mixer 29 can be adjusted to sweep the RF signal transmitted from the array antenna device 100 or the RF signal received by the array antenna device in horizontal and vertical two-dimensional directions. This will be described below with reference to specific circuit examples.

Since the region where each mixer 29 is arranged is a narrow region with a side of 600 to 700 μm, many circuit elements cannot be arranged in such a region. Therefore, circuits of a certain size, such as an LO signal oscillator (not illustrated) that supplies an LO signal to the LO signal main line 22 and a controller (not illustrated) that controls each of the above-described phase shifters, are all arranged outside the mixer arrangement region 290.

-Circuit Example of Transmitter-

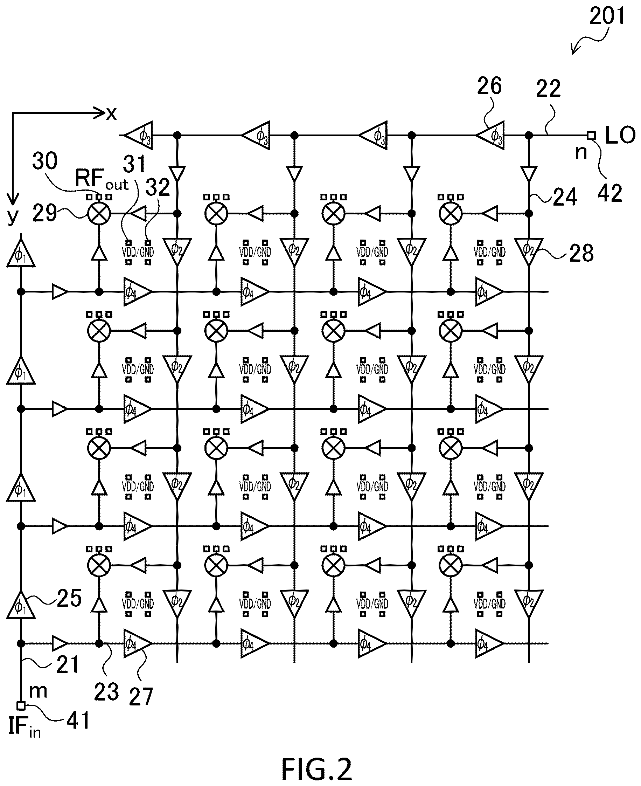

FIG. 2 is a diagram illustrating a circuit example of a 300 GHz silicon CMOS transmitter implemented on the semiconductor substrate 20 of the array antenna device 100 of FIG. 1. In a transmitter circuit 201, mixers 29 are arranged in a 4×4 grid pattern. Each mixer 29 includes, for example, one or more transistors and one or more passive elements. Each mixer 29 is electrically connected to a corresponding antenna element 11 (see FIG. 1) on the printed circuit board 10 via an RF signal terminal 30 by flip-chip bonding. The terminals on both sides of the RF signal terminal 30 in the figure represent ground terminals. In addition, a power supply terminal 31 and a ground terminal 32 provided corresponding to each mixer 29 are electrically connected to the power supply line and the ground line on the printed circuit board 10 described above, and each mixer 29 operates by receiving the power therefrom.

In the transmitter circuit 201, an IF signal main line 21 and an LO signal main line 22 extend in mutually orthogonal directions outside the mixers 29 arranged in a grid pattern. Furthermore, four IF signal branch lines 23 extend from the IF signal main line 21 via buffers at the same arrangement pitch as the mixers 29, in a direction orthogonal to the IF signal main line 21, that is, parallel to the LO signal main line 22. Similarly, a plurality of LO signal branch lines 24 extend from the LO signal main line 22 via buffers at the same arrangement pitch as the mixers 29, in a direction orthogonal to the LO signal main line 22, that is, parallel to the IF signal main line 21. Each mixer 29 is arranged at each intersection of the plurality of IF signal branch lines 23 and the plurality of LO signal branch lines 24, and is connected to the nearest IF signal branch line 23 and LO signal branch line 24 via buffers. For example, each mixer 29 mixes a 50 GHz IF signal supplied from the IF signal branch line 23 and a 225 GHz LO signal supplied from the LO signal branch line 24 to output a 275 GHz RF signal.

In the IF signal main line 21, $\varphi_1$ phase shifters 25 that delay the signal phase by $\varphi_1$ are inserted between each connection point of the IF signal branch lines 23. Furthermore, in the IF signal branch lines 23, $\varphi_4$ phase shifters 27 that delay the signal phase by $\varphi_4$ are inserted between each connection point of the mixers 29. That is, the IF signal input to an IF signal terminal 41 is input to each mixer 29 with its phase delayed each time it passes through a $\varphi_1$ phase shifter 25 and a $\varphi_4$ phase shifter 27. The $\varphi_1$ phase shifters 25 and the $\varphi_4$ phase shifters 27 are controlled through their respective common control lines, but for convenience, the illustration of these control lines and the controller is omitted.

In the LO signal main line 22, $\varphi_3$ phase shifters 26 that delay the signal phase by $\varphi_3$ are inserted between each connection point of the LO signal branch lines 24. Furthermore, in the LO signal branch lines 24, $\varphi_2$ phase shifters 28 that delay the signal phase by $\varphi_2$ are inserted between each connection point of the mixers 29. That is, the LO signal input to an LO signal terminal 42 is input to each mixer 29 with its phase delayed each time it passes through a $\varphi_3$ phase shifter 26 and a $\varphi_2$ phase shifter 28. The $\varphi_3$ phase shifters 26 and the $\varphi_2$ phase shifters 28 are controlled through their respective common control lines, but for convenience, the illustration of these control lines and the controller is omitted.

As illustrated in FIG. 2, with the upper left as the origin, the row direction to the right as the x direction, and the column direction downward as the y direction, the arrangement position of each mixer 29 is represented by natural numbers (x, y). With the maximum value of x being n, the maximum value of y being m, and the IF signal terminal 41 and the LO signal terminal 42 as reference phases, the IF signal phase and LO signal phase input to the mixer 29 at the arrangement position (x, y) and the RF signal phase output therefrom are expressed as follows, respectively.

IF signal phase:

$$(m - y)\varphi_1 + (x - 1)\varphi_4$$

LO signal phase:

$$(n - x)\varphi_3 + (y - 1)\varphi_2$$

RF signal phase:

$$(m - y)\varphi_1 + (x - 1)\varphi_4 + (n - x)\varphi_3 + (y - 1)\varphi_2$$

Here, when $\varphi_1 = \varphi_2$ and $\varphi_3 = \varphi_4$, the RF signal phase becomes $(m - 1)\varphi_1 + (n - 1)\varphi_3$. That is, an RF signal of the same phase is output from every mixer 29 regardless of the arrangement position of the mixer 29. This means that the RF signal transmitted from the array antenna device 100 is beamformed directly forward, that is, in the normal direction of the printed circuit board 10.

Conversely, when $\varphi_1 \neq \varphi_2$, the beam direction of the RF signal shifts in the column direction from the normal direction of the printed circuit board 10, and when $\varphi_3 \neq \varphi_4$, the beam direction of the RF signal shifts in the row direction from the normal direction of the printed circuit board 10. Therefore, by appropriately controlling the $\varphi_1$ phase shifters 25 and the $\varphi_2$ phase shifters 28 to adjust the relative relationship between $\varphi_1$ and $\varphi_2$, and by appropriately controlling the $\varphi_3$ phase shifters 26 and the $\varphi_4$ phase shifters 27 to adjust the relative relationship between $\varphi_3$ and $\varphi_4$, the beam of the transmitted RF signal can be freely swept in the column direction and the row direction.

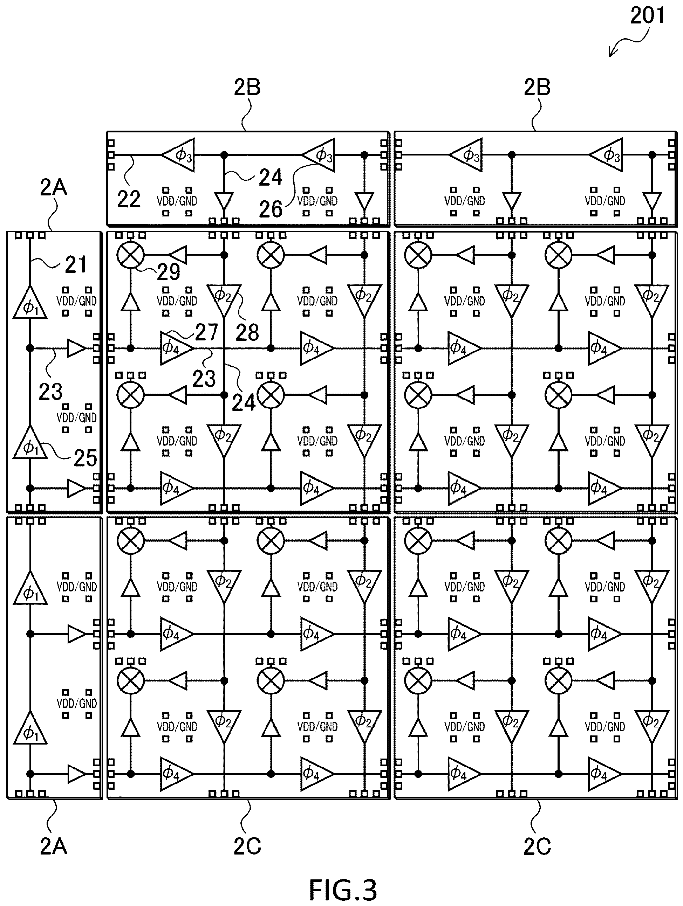

The transmitter circuit 201 can be configured not only as a monolithic configuration on a single semiconductor substrate 20 but also as a chiplet configuration in which each circuit element is divided into a plurality of chips and these chips are connected together. FIG. 3 is a diagram illustrating an example in which the transmitter circuit 201 is configured as a chiplet configuration. For example, the transmitter circuit 201 can be divided into three types of chips. A chip 2A is a chip for the IF signal line portion. The chip 2A includes an IF signal main line 21, two IF signal branch lines 23, and two $\varphi_1$ phase shifters 25. A chip 2B is a chip for the LO signal line portion. The chip 2B includes an LO signal main line 22, two LO signal branch lines 24, and two $\varphi_3$ phase shifters 26. A chip 2C is a chip for the mixer portion. The chip 2C includes four mixers 29, two IF signal branch lines 23, two LO signal branch lines 24, four $\varphi_4$ phase shifters 27, and four $\varphi_2$ phase shifters 28. In each chip, pads for connecting to signal lines of other chips are arranged at the ends of each signal line.

By connecting a plurality of chips 2A and a plurality of chips 2B in series, respectively, the IF signal main line 21 and the LO signal main line 22 can be extended as desired. In addition, by connecting a plurality of chips 2C horizontally and vertically, the number of mixers 29 can be increased and the IF signal branch lines 23 and the LO signal branch lines 24 can be extended as desired. The transmitter circuit 201 can be configured by connecting two chips 2A in series, connecting two chips 2B in series, connecting four chips 2C horizontally and vertically, and joining them together.

-Circuit Example of Receiver-

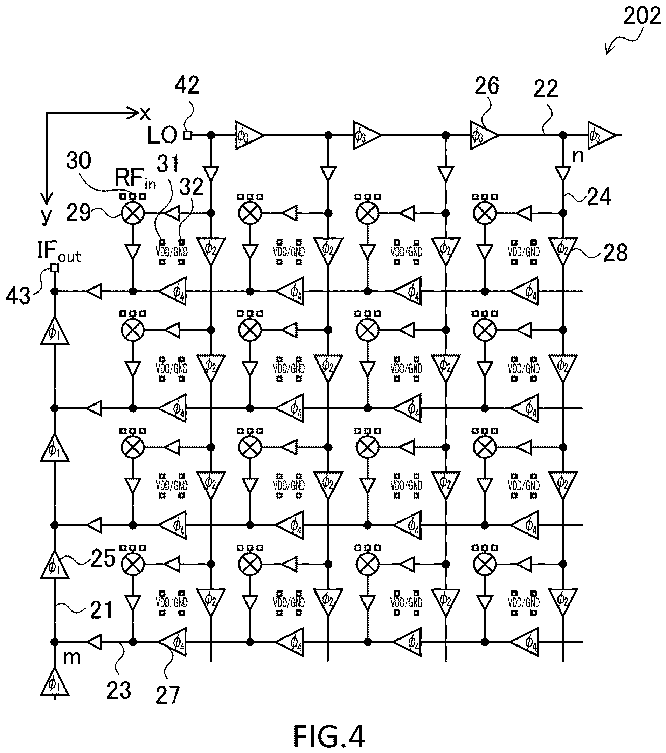

FIG. 4 is a diagram illustrating a circuit example of a 300 GHz silicon CMOS receiver implemented on the semiconductor substrate 20 of the array antenna device 100 of FIG. 1. In a receiver circuit 202, mixers 29 are arranged in a 4×4 grid pattern. Each mixer 29 includes, for example, one or more transistors and one or more passive elements. Each mixer 29 is electrically connected to a corresponding antenna element 11 (see FIG. 1) on the printed circuit board 10 via an RF signal terminal 30 by flip-chip bonding. The terminals on both sides of the RF signal terminal 30 in the figure represent ground terminals. In addition, a power supply terminal 31 and a ground terminal 32 provided corresponding to each mixer 29 are electrically connected to the power supply line and the ground line on the printed circuit board 10 described above, and each mixer 29 operates by receiving the power therefrom.

In the receiver circuit 202, an IF signal main line 21 and an LO signal main line 22 extend in mutually orthogonal directions outside the mixers 29 arranged in a grid pattern. Furthermore, four IF signal branch lines 23 extend from the IF signal main line 21 via buffers at the same arrangement pitch as the mixers 29, in a direction orthogonal to the IF signal main line 21, that is, parallel to the LO signal main line 22. Similarly, a plurality of LO signal branch lines 24 extend from the LO signal main line 22 via buffers at the same arrangement pitch as the mixers 29, in a direction orthogonal to the LO signal main line 22, that is, parallel to the IF signal main line 21. Each mixer 29 is arranged at each intersection of the plurality of IF signal branch lines 23 and the plurality of LO signal branch lines 24, and is connected to the nearest IF signal branch line 23 and LO signal branch line 24 via buffers. For example, each mixer 29 mixes a 275 GHz RF signal supplied from the RF signal terminal 30 and a 225 GHz LO signal supplied from the LO signal branch line 24 to output an IF signal of approximately 50 GHz to the IF signal branch line 23.

In the IF signal main line 21, $\varphi_1$ phase shifters 25 that delay the signal phase by $\varphi_1$ are inserted between each connection point of the IF signal branch lines 23. Furthermore, in the IF signal branch lines 23, $\varphi_4$ phase shifters 27 that delay the signal phase by $\varphi_4$ are inserted between each connection point of the mixers 29. That is, considering the phase of an IF signal terminal 43 as a reference, the IF signal output from each mixer 29 is advanced in phase by the amount corresponding to the passage through the $\varphi_1$ phase shifters 25 and the $\varphi_4$ phase shifters 27 relative to the reference phase. The $\varphi_1$ phase shifters 25 and the $\varphi_4$ phase shifters 27 are controlled through their respective common control lines, but for convenience, the illustration of these control lines and the controller is omitted.

In the LO signal main line 22, $\varphi_3$ phase shifters 26 that delay the signal phase by $\varphi_3$ are inserted between each connection point of the LO signal branch lines 24. Furthermore, in the LO signal branch lines 24, $\varphi_2$ phase shifters 28 that delay the signal phase by $\varphi_2$ are inserted between each connection point of the mixers 29. That is, the LO signal input to the LO signal terminal 42 is input to each mixer 29 with its phase delayed each time it passes through a $\varphi_3$ phase shifter 26 and a $\varphi_2$ phase shifter 28. The $\varphi_3$ phase shifters 26 and the $\varphi_2$ phase shifters 28 are controlled through their respective common control lines, but for convenience, the illustration of these control lines and the controller is omitted.

As illustrated in FIG. 4, with the upper left as the origin, the row direction to the right as the x direction, and the column direction downward as the y direction, the arrangement position of each mixer 29 is represented by natural numbers (x, y). With the maximum value of x being n, the maximum value of y being m, and the IF signal terminal 43 and the LO signal terminal 42 as reference phases, the IF signal phase output from the mixer 29 at the arrangement position (x, y), the LO signal phase input thereto, and the RF signal phase are expressed as follows, respectively.

IF signal phase:

$$(m - y)\varphi_1 + (n - x)\varphi_4$$

LO signal phase:

$$(x - 1)\varphi_3 + (y - 1)\varphi_2$$

RF signal phase:

$$(m - y)\varphi_1 + (n - x)\varphi_4 + (x - 1)\varphi_3 + (y - 1)\varphi_2$$

Here, when $\varphi_1 = \varphi_2$ and $\varphi_3 = \varphi_4$, the RF signal phase becomes $(m - 1)\varphi_1 + (n - 1)\varphi_3$. That is, an RF signal of the same phase is input to every mixer 29 regardless of the arrangement position of the mixer 29. This means that the RF signal received by the array antenna device 100 is beamformed directly forward, that is, in the normal direction of the printed circuit board 10.

Conversely, when $\varphi_1 \neq \varphi_2$, the beam direction of the RF signal shifts in the column direction from the normal direction of the printed circuit board 10, and when $\varphi_3 \neq \varphi_4$, the beam direction of the RF signal shifts in the row direction from the normal direction of the printed circuit board 10. Therefore, by appropriately controlling the $\varphi_1$ phase shifters 25 and the $\varphi_2$ phase shifters 28 to adjust the relative relationship between $\varphi_1$ and $\varphi_2$, and by appropriately controlling the $\varphi_3$ phase shifters 26 and the $\varphi_4$ phase shifters 27 to adjust the relative relationship between $\varphi_3$ and $\varphi_4$, the beam of the received RF signal can be freely swept in the column direction and the row direction.

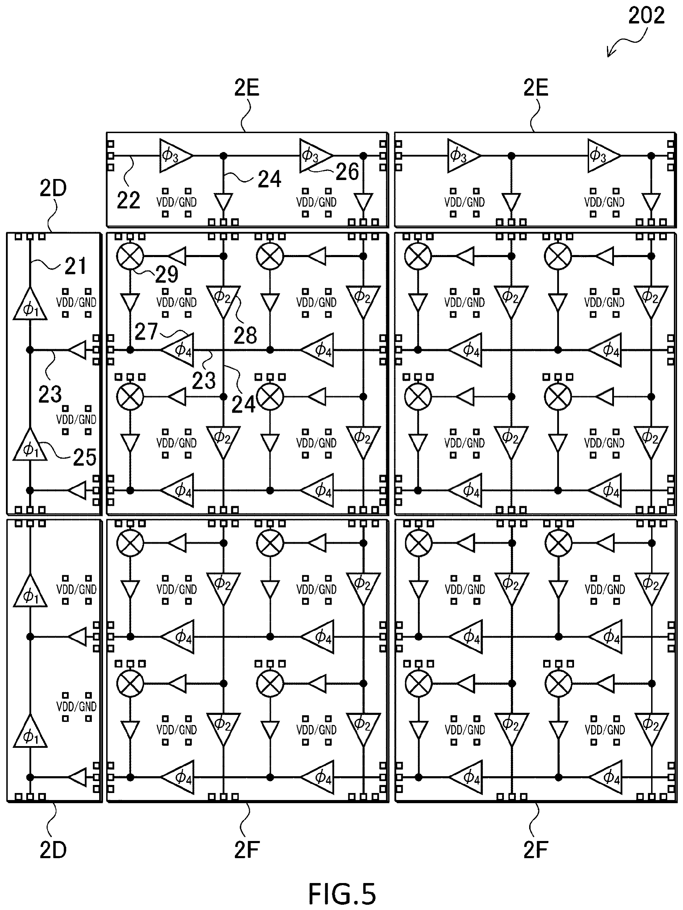

The receiver circuit 202 can be configured not only as a monolithic configuration on a single semiconductor substrate 20 but also as a chiplet configuration in which each circuit element is divided into a plurality of chips and these chips are connected together. FIG. 5 is a diagram illustrating an example in which the receiver circuit 202 is configured as a chiplet configuration. For example, the receiver circuit 202 can be divided into three types of chips. A chip 2D is a chip for the IF signal line portion. The chip 2D includes an IF signal main line 21, two IF signal branch lines 23, and two $\varphi_1$ phase shifters 25. A chip 2E is a chip for the LO signal line portion. The chip 2E includes an LO signal main line 22, two LO signal branch lines 24 and two $\varphi_3$ phase shifters 26. A chip 2F is a chip for the mixer portion. The chip 2F includes four mixers 29, two IF signal branch lines 23, two LO signal branch lines 24, four $\varphi_4$ phase shifters 27, and four $\varphi_2$ phase shifters 28. In each chip, pads for connecting to signal lines of other chips are arranged at the ends of each signal line.

By connecting a plurality of chips 2D and a plurality of chips 2E in series, respectively, the IF signal main line 21 and the LO signal main line 22 can be extended as desired. In addition, by connecting a plurality of chips 2F horizontally and vertically, the number of mixers 29 can be increased and the IF signal branch lines 23 and the LO signal branch lines 24 can be extended as desired. The receiver circuit 202 can be configured by connecting two chips 2D in series, connecting two chips 2E in series, connecting four chips 2F horizontally and vertically, and joining them together.

Comparing FIG. 4 and FIG. 5, the insertion positions of the $\varphi_1$ phase shifters 25 and the $\varphi_3$ phase shifters 26 in the IF signal main line 21 and the LO signal main line 22 are different, but this is due to the layout convenience of the chips 2D and 2E, and the receiver circuits 202 of FIG. 4 and FIG. 5 operate in exactly the same manner.

-Circuit Example of Transceiver-

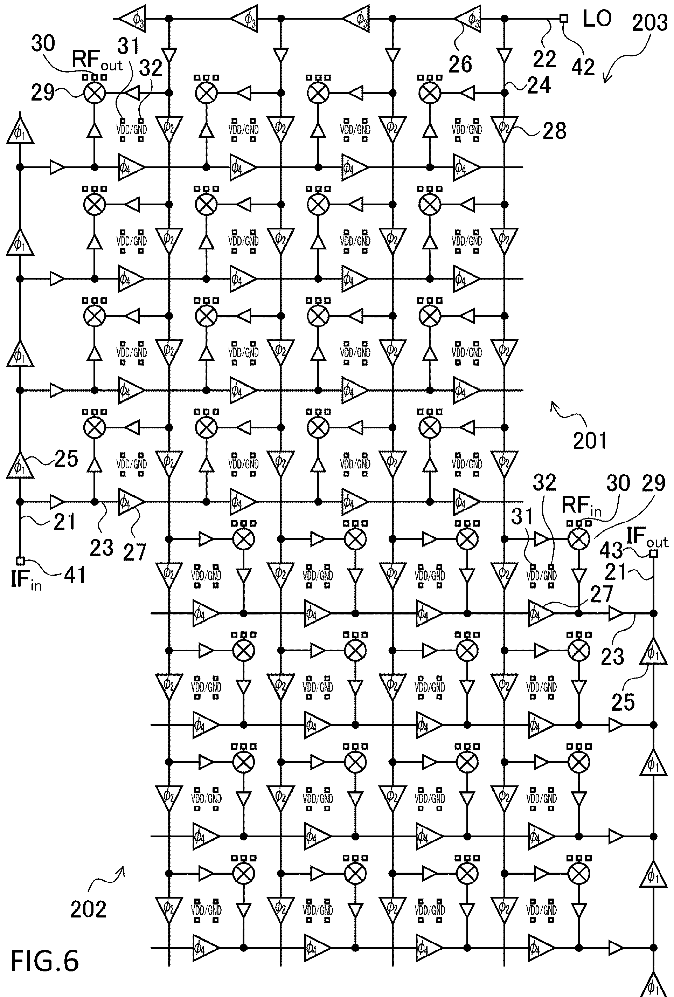

Since the LO signal is input to the mixer in both the transmitter and the receiver, a transceiver can be configured by sharing the LO signal line between the transmitter and the receiver. FIG. 6 is a diagram illustrating a circuit example of a transceiver implemented on the semiconductor substrate of the array antenna device of FIG. 1. Since a transceiver is used, it is necessary to arrange a corresponding number of antenna elements 11 for transmission and reception on the printed circuit board 10.

The transceiver circuit 203 includes a transmitter circuit 201 and a receiver circuit 202. The transmitter circuit 201 is the same as the transmitter circuit 201 of FIG. 2, and the receiver circuit 202 is a left-right reversed version of the receiver circuit 202 of FIG. 4. In the transceiver circuit 203, the LO signal main line 22 and the LO signal branch lines 24 are shared by the transmitter circuit 201 and the receiver circuit 202. In this way, a transceiver can be easily configured.

[Advantageous Effects]

As described above, according to the present embodiment, an array antenna can be employed in a 300 GHz silicon CMOS transmitter and receiver to increase transmission power and reception power. Furthermore, by appropriately controlling the phase shifters inserted at various points in the IF signal main line and the IF signal branch lines and the LO signal main line and the LO signal branch lines, the transmitted RF signal and the received RF signal can be freely swept in the horizontal and vertical two-dimensional directions. In addition, beam squint can be easily mitigated.

By arranging the mixers, the LO signal generator, and the controller on the same layer of the semiconductor substrate 20, heat generated from various circuit elements is less likely to accumulate and heat dissipation becomes easier compared to the case where these are arranged in a stacked manner. This can prevent performance degradation of the transmitter circuit 201, the receiver circuit 202, and the transceiver circuit 203 due to heat generation in the semiconductor substrate 20.

Since the circuits of the transmitter and the receiver employed in the present embodiment have a circuit topology that is easy to form into chiplets, these circuits can be configured as a chiplet configuration to easily make the array scale scalable according to the required transmission/reception power.

[Variation]

The mixers 29 do not need to be arranged in an orderly grid pattern, and may be arranged in a staggered pattern, for example. The IF signal branch lines 23 and the LO signal branch lines 24 do not need to be arranged in an orderly manner at equal intervals, and for example, two IF signal branch lines 23 may be arranged between adjacent rows of mixers 29, or two LO signal branch lines 24 may be arranged between adjacent columns of mixers 29.

The antenna elements 11 may be implemented not on the printed circuit board 10 but on a redistribution layer (RDL) of the semiconductor substrate 20. By doing so, the array antenna device can be realized as a single chip.

It goes without saying that the antenna elements 11 are not limited to a total of 16 in a $4\times4$ arrangement. By increasing the number of antenna elements 11, the antenna gain can be increased. For example, by using a total of 1,024 antenna elements 11 in a $32\times32$ arrangement, the antenna gain becomes 64 times greater by simple calculation compared to when there are 16 antenna elements 11. When the number of antenna elements 11 is large, the line lengths of the IF signal main line and the IF signal branch lines and the LO signal main line and the LO signal branch lines become long, which may cause large signal attenuation at the terminal side of the signal lines. Therefore, buffer circuits may be appropriately provided at appropriate locations along the signal lines so that signals of a certain magnitude or greater can be transmitted to the terminal side.

When configuring as a chiplet configuration, more $\varphi_1$ phase shifters 25 and more $\varphi_3$ phase shifters 26 may be included in the chips for the IF signal portion and the LO signal portion, respectively, and more mixers 29, IF signal branch lines 23, LO signal branch lines 24, $\varphi_4$ phase shifters 27, and $\varphi_2$ phase shifters 28 may be included in the chip for the mixer portion.

The antenna elements 11 may be implemented not on the printed circuit board 10 but on a redistribution layer (RDL) of the semiconductor substrate 20. By doing so, the array antenna device can be realized as a single chip.

Either one of the $\varphi_1$ phase shifters 25 and the $\varphi_2$ phase shifters 28, and/or either one of the $\varphi_3$ phase shifters 26 and the $\varphi_4$ phase shifters 27, may be omitted or replaced with phase shifters having a fixed phase shift amount. In particular, the $\varphi_2$ phase shifters 28 and the $\varphi_4$ phase shifters 27 must be arranged in a narrow region, and in some cases cannot be arranged. In such cases, the $\varphi_1$ phase shifters 25 and the $\varphi_3$ phase shifters 26 may be kept as they are, and the $\varphi_2$ phase shifters 28 and the $\varphi_4$ phase shifters 27 may be replaced with phase shifters having a fixed phase shift amount, such as meander wiring. Even in this way, although the beam sweep range is reduced, beam sweeping itself is possible.

The semiconductor substrate 20 may be configured with compound semiconductors such as GaAs, InP, and InGaAlP, or with bipolar CMOS such as SiGe-BiCMOS. Since compound semiconductors and BiCMOS have excellent high-frequency characteristics, for the transmitter, it becomes possible to provide a power amplifier that amplifies the 300 GHz band RF signal output from the mixer 29 at the subsequent stage of the mixer 29, that is, between the antenna element 11 and the mixer 29, and for the receiver, it becomes possible to provide a low-noise amplifier that amplifies the weak 300 GHz band RF signal received by the antenna element 11 at the preceding stage of the mixer 29, that is, between the antenna element 11 and the mixer 29. Although compound semiconductors and BiCMOS have higher manufacturing costs than silicon CMOS, since the transmission/reception power per antenna element 11 can be increased, the number of transmitters and receivers required to secure the necessary transmission/reception power can be reduced. That is, since compound semiconductors and BiCMOS can obtain greater transmission/reception power with a smaller circuit scale compared to silicon CMOS, the problem of increased manufacturing costs is overcome.

As described above, embodiments of the present invention have been explained as examples of the technology. For this purpose, attached drawings and detailed explanations have been provided. Therefore, among the components described in the attached drawings and detailed explanations, there may be components that are not essential for solving the problem but are included to illustrate the above technology. Accordingly, the presence of these non-essential components in the attached drawings or detailed explanations should not immediately be taken as an indication that these non-essential components are essential. Furthermore, since the above-described embodiments are for illustrating the technology of the present invention, various modifications, replacements, additions, and omissions can be made within the scope of the claims and their equivalents.

INDUSTRIAL APPLICABILITY

The array antenna device according to the present invention can be widely used not only for the 300 GHz band but also for wireless communication devices and wireless sensors that use the terahertz band of 100 GHz or higher.

REFERENCE SIGNS LIST

100 Array antenna device
10 Printed circuit board (first layer)
11 Antenna element
110 Arrangement region of antenna elements (arrangement region of a plurality of antenna elements)
20 Semiconductor substrate (second layer)
21 IF signal main line
22 LO signal main line
23 IF signal branch line
24 LO signal branch line
25 $\varphi_1$ phase shifter (first phase shifter)
26 $\varphi_2$ phase shifter (fourth phase shifter, first phase shifter, third phase shifter)
27 $\varphi_3$ phase shifter (second phase shifter)
28 $\varphi_4$ phase shifter (third phase shifter, second phase shifter, third phase shifter)
29 Mixer
290 Arrangement region of mixers (arrangement region of a plurality of mixers)
2A, 2D Chip (first chip)
2B, 2E Chip (second chip)
2C, 2F Chip (third chip)

**Claims**

1. An array antenna device, comprising:

   a first layer in which a plurality of antenna elements are arranged in a grid pattern; and
   a second layer stacked on the first layer,
   wherein the second layer includes

   an IF signal main line and an LO signal main line extending in mutually orthogonal directions,
   a plurality of IF signal branch lines and a plurality of LO signal branch lines extending in directions orthogonal to the IF signal main line and the LO signal main line, respectively,
   a plurality of mixers arranged in a same grid pattern as the plurality of antenna elements at each intersection of the plurality of IF signal branch lines and the plurality of LO signal branch lines, and electrically connected to the plurality of IF signal branch lines, the plurality of LO signal branch lines, and the plurality of antenna elements, respectively,
   a plurality of first phase shifters in at least one of between each connection point of the plurality of IF signal branch lines in the IF signal main line and between each connection point of the plurality of mixers in the plurality of LO signal branch lines, and
   a plurality of second phase shifters in at least one of between each connection point of the plurality of LO signal branch lines in the LO signal main line and between each connection point of the plurality of mixers in the plurality of IF signal branch lines, and

   the first layer and the second layer are stacked vertically such that an arrangement region of the plurality of antenna elements in the first layer and an arrangement region of the plurality of mixers in the second layer overlap in plan view.

2. The array antenna device according to claim 1, wherein

   the plurality of first phase shifter are inserted between each connection point of the plurality of IF signal branch lines in the IF signal main line, and
   the second layer includes a plurality of third phase shifters or meander wiring between each connection point of the plurality of mixers in the plurality of LO signal branch lines.

3. The array antenna device according to claim 1, wherein

the plurality of second phase shifters are inserted between each connection point of the plurality of LO signal branch lines in the LO signal main line, and

the second layer includes a plurality of third phase shifters or meander wiring between each connection point of the plurality of mixers in the plurality of IF signal branch lines.

4. The array antenna device according to claim 1, wherein

the plurality of first phase shifters are inserted between each connection point of the plurality of IF signal branch lines in the IF signal main line,

the plurality of second phase shifters are inserted between each connection point of the plurality of LO signal branch lines in the LO signal main line, and

the second layer includes a plurality of third phase shifters or meander wiring between each connection point of the plurality of mixers in the plurality of IF signal branch lines and a plurality of fourth phase shifters or meander wiring between each connection point of the plurality of mixers in the plurality of LO signal branch lines.

5. The array antenna device according to claim 4, wherein

the IF signal main line and the plurality of first phase shifters are implemented on a first chip,

the LO signal main line and the plurality of second phase shifters are implemented on a second chip,

the plurality of mixers, the plurality of IF signal branch lines, the plurality of LO signal branch lines, the plurality of third phase shifter or meander wiring as a substitute therefor, and the plurality of fourth phase shifters or meander wiring as a substitute therefor are implemented on a third chip, and

the first chip and the second chip are connected to the third chip to form the second layer.

6. The array antenna device according to claim 5, wherein

a plurality of the first chips are connected in series so as to extend the IF signal main line,

a plurality of the second chips are connected in series so as to extend the LO signal main line,

a plurality of the third chips are connected horizontally and vertically so as to extend the plurality of IF signal branch lines and the plurality of LO signal branch lines, respectively, and

the plurality of the first chips connected in series and the plurality of the second chips connected in series are connected to the plurality of the third chips connected horizontally and vertically to form the second layer.

7. The array antenna device according to any one of claims 1 to 6, wherein at least one of the plurality of IF signal branch lines and the plurality of LO signal branch lines are arranged in parallel at a same pitch as the plurality of antenna elements.

8. The array antenna device according to any one of claims 1 to 6, wherein

the first layer is a printed circuit board, and

the second layer is a semiconductor substrate.

9. The array antenna device according to claims 7, wherein

the first layer is a printed circuit board, and

the second layer is a semiconductor substrate.

FIG.1

FIG.2

FIG.3

FIG.4

FIG.5

FIG.6

FIG.7

**EP 4 738 607 A1**

## INTERNATIONAL SEARCH REPORT

International application No.

**PCT/JP2024/027119**

| A. | CLASSIFICATION OF SUBJECT MATTER |
|---|---|

*H01Q 3/36*(2006.01)i; *H01Q 21/06*(2006.01)i; *H01Q 21/30*(2006.01)i; *H04B 1/38*(2015.01)i
FI: H01Q3/36; H01Q21/06; H04B1/38; H01Q21/30

According to International Patent Classification (IPC) or to both national classification and IPC

| B. | FIELDS SEARCHED |
|---|---|

Minimum documentation searched (classification system followed by classification symbols)

H01Q3/36; H01Q21/06; H01Q21/30; H04B1/38

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 7-202548 A (KABUSHIKI KAISHA TOSHIBA) 04 August 1995 (1995-08-04) entire text, all drawings | 1-9 |
| A | JP 2022-47519 A (RENESAS ELECTRONICS AMERICA INC.) 24 March 2022 (2022-03-24) entire text, all drawings | 1-9 |
| A | JP 2003-101420 A (ALPS ELECTRIC CO., LTD.) 04 April 2003 (2003-04-04) entire text, all drawings | 1-9 |

☐ Further documents are listed in the continuation of Box C.   ☑ See patent family annex.

| | |
|---|---|
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "D"  document cited by the applicant in the international application | "X"  document of particular relevance; the claimed invention cannot be considered novel or cannot be considered to involve an inventive step when the document is taken alone |
| "E"  earlier application or patent but published on or after the international filing date | |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | "&"  document member of the same patent family |
| "P"  document published prior to the international filing date but later than the priority date claimed | |

| Date of the actual completion of the international search | Date of mailing of the international search report |
|---|---|
| **09 September 2024** | **24 September 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

18

## INTERNATIONAL SEARCH REPORT
### Information on patent family members

International application No.

**PCT/JP2024/027119**

| Patent document cited in search report | | | Publication date (day/month/year) | Patent family member(s) | | | Publication date (day/month/year) |
|---|---|---|---|---|---|---|---|
| JP | 7-202548 | A | 04 August 1995 | (Family: none) | | | |
| JP | 2022-47519 | A | 24 March 2022 | US | 2022/0085767 | A1 | |
| | | | | entire text, all drawings | | | |
| | | | | CN | 114172473 | A | |
| JP | 2003-101420 | A | 04 April 2003 | US | 2003/0068980 | A1 | |
| | | | | entire text, all drawings | | | |
| | | | | CN | 1411177 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020110814 A1